Europäisches Patentamt

European Patent Office

Office européen des brevets

(19)

(11) Veröffentlichungsnummer: **0 369 493**

**A2**

(12) **EUROPÄISCHE PATENTANMELDUNG**

(21) Anmeldenummer: **89122712.6**

(22) Anmeldetag: **06.12.89**

(51) Int. Cl.⁵: **G01D 5/16**

(30) Priorität: **05.04.86 DE 3611469**

(43) Veröffentlichungstag der Anmeldung:
**23.05.90 Patentblatt 90/21**

(60) Veröffentlichungsnummer der früheren
Anmeldung nach Art. 76 EPÜ: **0 240 707**

(84) Benannte Vertragsstaaten:
**CH DE FR GB IT LI**

(71) Anmelder: **ROBERT BOSCH GMBH**
**Postfach 10 60 50**
**D-7000 Stuttgart 10(DE)**

(72) Erfinder: **Gölzer, Thomas, Dr. Dipl.-Phys.**
**Gartenstrasse 20**
**D-7141 Schwieberdingen(DE)**
Erfinder: **Möllendorf, Manfred, Dr. Dipl.-Phys.**
**203 Surrey Lane**
**Anderson, SC 29621(US)**

(54) **Verfahren zur berührungslosen Positionsmessung.**

(57) Es werden Verfahren zur berührungslosen Positionsmessung vorgeschlagen, wobei die Ausgangssignale (50 - 56) einer Sensoranordnung (9) zur Positionsbestimmung eines Positionsindikators (44) herangezogen werden. Die Position des Indikators (44) ergibt sich aus einer einfachen Auswertung der Ausgangssignale (51 - 54) von zwei oder vier aufeinanderfolgenden Sensoren i-1 bis i+2 (58 - 61). Mit Hilfe einer Temperaturmessung der Sensoranordnung (9) wird neben der eindimensionalen Positionsmessung in Meßrichtung (45) auch eine Abstandsmessung des Indikators (44) von der Sensoranordnung (9) möglich. Mit dem der Abstandsmessung zugrunde liegenden Ganzkurven-Auswerteverfahren ist es auch möglich, Alterungs- oder Driftvorgänge der Sensoren (12 - 15, 21 - 24, 57 - 63) sowie vollständige Ausfälle von einzelnen Sensoren zu ermitteln.

FIG. 2

EP 0 369 493 A2

## Verfahren zur berührungslosen Positionsmessung

Stand der Technik

Die Erfindung geht aus von einem Verfahren zur berührungslosen Positionsmessung nach der Gattung der Ansprüche 1, 2 und 4. Aus der DE-C1 34 43 176 ist ein Verfahren zur Kalibrierung einer Einrichtung zur berührungslosen Positionsmessung bekannt, bei dem die Verhältnisse von Ausgangssignalen benachbarter Sensoren einer mehrere Sensoren enthaltenden Sensoranordnung, der ein Positionsindikator zugeordnet ist, in einer Auswerteeinheit bestimmten Positionen zugeordnet werden. Als Vergleichswerte sind zum einen Ausgangssignale benachbarter Sensoren vorgesehen, die fest vorgegebene Verhältnisse aufweisen. Zum anderen sind Werte vorgesehen, die Signalverhältnissen entsprechen, die bei einer vorgegebenen Schrittweite des Positionsindikators in den Kalibrierlauf aufgetreten sind. Die bekannten Auswerteverfahren setzen ein lineares Verhalten der Ausgangssignale der Sensoren voraus.

Der Erfindung liegt die Aufgabe zugrunde, ein Verfahren zum Auswerten der von einer Positionsmeßvorrichtung erfaßten Signale anzugeben, das eine möglichst genaue Positionsermittlung eines Positionsindikators bezüglich einer Sensoranordnung ermöglicht. Ferner soll eine Aussage über den Abstand zwischen dem Positionsindikator und der Sensoranordnung sowie über den Zustand der gesamten Anordnung aus den erfaßten Signalen erhalten werden.

Vorteile der Erfindung

Erfindungsgemäß ist ein erstes Verfahren zur Positionsermittlung vorgesehen mit zwei linearen Interpolationen jeweils zwischen dem Meßwert des i-1ten und i+1ten und dann dem iten und i+2ten Sensor einer Sensorreihe und anschließender Mittelwertbildung zwischen den beiden Durchgängen, die sich aus den Schnittpunkten der beiden Interpolationsgeraden mit einer Nullinie ergeben, die einem Ausgangssignal der Sensoren entspricht, das nicht vom Positionsindikator beeinflußt ist, wobei angenommen wird, daß die Ausgangssignale des iten und des i+1ten Sensors auf unterschiedlichen Seiten bezüglich der Nullinie liegen.

Gemäß einem erfindungsgemäßen zweiten Verfahren wird zu einem Nulldurchgang, der sich als Schnittpunkt einer aus einer linearen Interpolation zwischen dem Signal des iten und i+1ten Sensors einer Sensorreihe hervorgegangenen Gerade mit der Nullinie ergibt, ein Korrekturwert addiert. Auch bei diesem Verfahren wird angenommen, daß die Ausgangssignale des iten und i+1ten Sensors auf unterschiedlichen Seiten bezüglich der Nullinie liegen. Der Korrekturwert berücksichtigt den Fehler, der bei der linearen Interpolation zwischen zwei aufeinanderfolgenden Sensorsignalen auftritt. Der Korrekturwert wird aus einer den systematischen Fehler approximierenden Funktion berechnet. Gemäß einer vorteilhaften Ausgestaltung ist es vorgesehen, den Korrekturwert zunächst in einem Kalibriervorgang zu ermitteln und in einem Speicher in der Auswerteeinheit abzulegen.

Die erfindungsgemäße Auswerteverfahren für die Ausgangssignale der Sensoranordnung ermöglichen eine genaue Positionsbestimmung mit wenigen, einfachen arithmetischen Operationen in einer Auswerteeinheit.

Gemäß einem weiteren erfindungsgemäßen Verfahren ist es möglich, den Abstand zwischen dem Positionsindikator und der Sensoranordnung aus den Sensorsignalen zu ermitteln. Diese Information wird mittels eines Ganzkurven-Auswerte-Verfahrens erhalten, bei dem eine theoretische Verbindungslinie, auf der die Ausgangssignale der Sensoren liegen, approximiert und mit Werten verglichen wird, die zuvor bei einem Kalibriervorgang in einem Speicher abgelegt wurden.

Vorteilhafte Weiterbildungen und Verbesserungen der in den unabhängigen Ansprüchen angegebenen Verfahren ergeben sich aus Unteransprüchen.

Die erfindungsgemäßen Auswerteverfahren sind auch geeignet zur Auswertung der Signale, die von mehrreihigen Sensoranordnungen abgegeben werden. Mit einer wenigstens zweireihigen Sensoranordnung ist es unter Einbeziehung einer speziellen Positionsindikatorausrichtung möglich, ein Stör-Magnetfeld bei der Positionsermittlung zu berücksichtigen bzw. zu kompensieren. Die erfindungsgemäßen Verfahren werden zunächst auf die eine und dann die andere bzw. die anderen Sensorreihen angewandt und anschließend ein Mittelwert aus den zunächst ermittelten Positionen bzw. Abständen errechnet.

Die Berücksichtigung der Temperatur der Sensoranordnung bei dem Verfahren zum Ermitteln des Abstands zwischen dem Positionsindikator und der Sensoranordnung ermöglicht die Eliminierung des Temperatureinflusses auf die Signale der Sensoren und erhöht somit die Abstands-Meßgenauigkeit.

In einer besonders vorteilhaften Weiterbildung ist das Ganzkurven-Auswerteverfahren zum Erkennen von Alterungs- und Driftvorgängen sowie vollständigen Ausfällen der Sensoren heranziehbar.

Weitere Einzelheiten und vorteilhafte Weiterbildungen der erfindungsgemäßen Verfahren zur berührungslosen Positionsmessung ergeben sich aus weiteren Unteransprüchen in Verbindung mit der folgenden Beschreibung.


Zeichnung

Figur 1 zeigt eine Sensoranordnung einer Positionsmeßvorrichtung,

Figur 2 zeigt Ausgangssignale über dem Meßweg von Sensoren einer Sensoranordnung nach Figur 1, und

Figur 3 zeigt einen Verlauf eines systematischen Positionsmeßfehlers zwischen einem i und i+1ten Sensor.

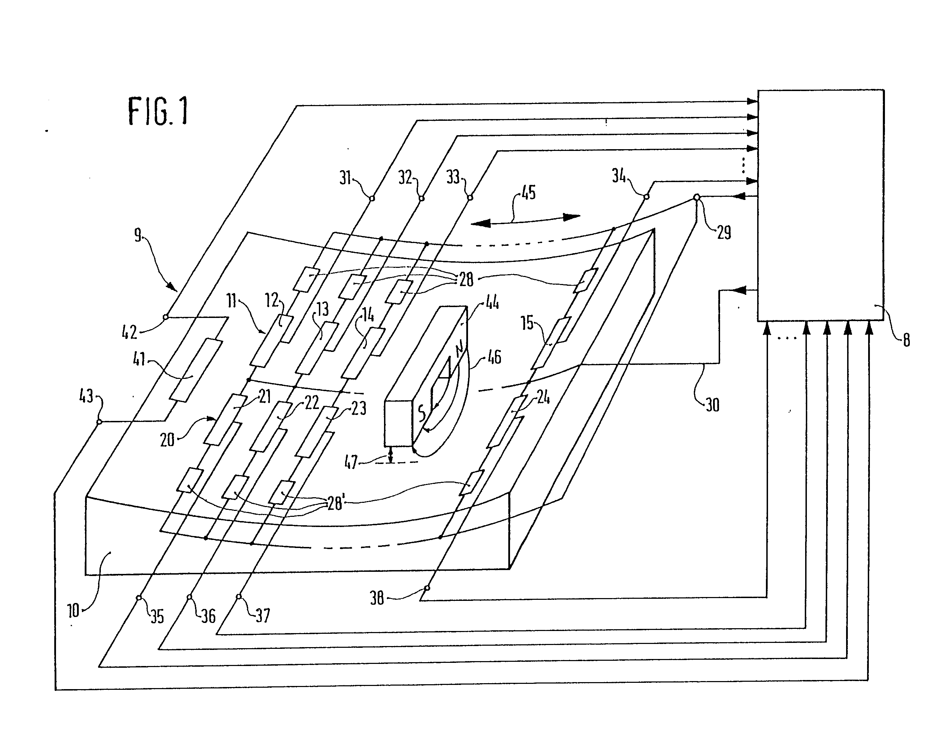

Figur 1 zeigt eine Sensoranordnung 9, die auf einem Substrat 10 aufgebaut ist. Das Substrat 10 enthält eine erste Sensorreihe 11, von welcher der erste, der zweite, der dritte und der letzte Sensor 12 - 15 gezeigt sind, und eine zweite Sensorreihe 20, von der ebenfalls der erste, der zweite, der dritte und der letzte Sensor 21 - 24 gezeigt sind. Die Sensoren 12 - 15, 21 - 24 liegen mit einem Anschluß über Trimmwiderstände 28, 28' an einer gemeinsamen ersten Stromversorgungsleitung 29 und mit einem anderen Anschluß an einer zweiten Stromversorgungsleitung 30. Die Ausgangssignale der Sensoren 12 - 15, 21 - 24 stehen an den Anschlüssen 31 - 38 zur Verfügung, die mit Mittelanzapfungen der Sensoren 15 - 12, 21 - 24 verbunden sind. Auf dem Substrat 10 befindet sich weiterhin ein Temperatursensor 41, dessen Ausgangssignal an den Anschlüssen 42, 43 zur Verfügung steht. Die Anschlüsse 29 - 38, 42, 43 sind mit einer signalverarbeitenden Anordnung 8 verbunden.

Ein Positionsindikator 44, der als Permanentmagnet oder als Magnetspule ausgeführt ist, ist an einem hier nicht gezeigten Teil befestigt, dessen Position in Meßrichtung 45 bestimmt wird. Der Indikator 44, dessen Magnetfeld 46 die Sensoranordnung 9 durchdringt, befindet sich in einem Abstand 47 vom Substrat 10 entfernt.

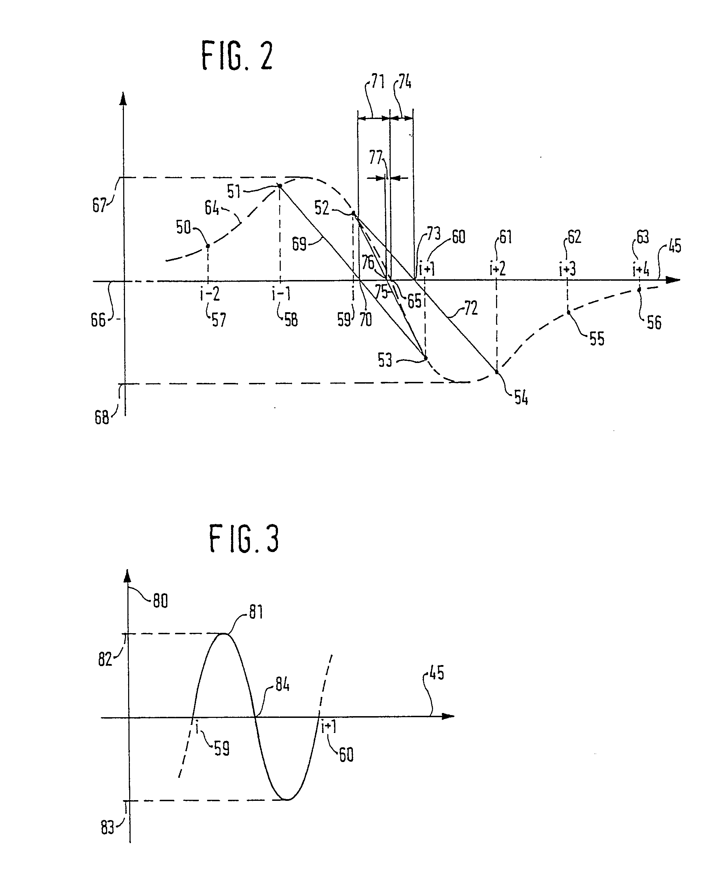

Figur 2 zeigt Ausgangssignale 50 - 56 des i-2ten bis i+4ten Sensors 57 - 63. Die Sensoren i-2 bis i+4, 57 - 63 sind hierbei aufeinanderfolgende Sensoren entweder der ersten oder der zweiten Sensorreihe 11, 20. Gestrichelt gezeichnet ist eine theoretische Verbindungslinie 64, auf welcher die Ausgangssignale 50 - 56 liegen. Die Verbindungslinie 64 hat einen Nulldurchgang 65 auf einem bestimmten Niveau 66, zu welchem sie punktsymmetrisch liegt. Sie weist ferner einen ersten und zweiten Extremwert 67, 68 auf. Das bestimmte Niveau 66 entspricht beispielsweise einer Nullinie, auf der die Ausgangssignale 50 - 56 liegen, wenn die Sensoren 57 - 63 vom Magnetfeld 46 des Indikators 44 unbeeinflußt sind.

Zwischen dem Ausgangssignal 51 des i-1ten Sensors 58 und dem Ausgangssignal 53 des i+1ten Sensors 60 liegt eine erste Gerade 69, die einen ersten Nulldurchgang 70 auf der Nullinie 66 aufweist, welcher von dem Nulldurchgang 65 der theoretischen Verbindungslinie 64 einen ersten Abstand 71 aufweist. Zwischen dem Ausgangssignal 52 des iten Sensors 59 und dem Ausgangssignal 54 des i+2ten Sensors 61 liegt eine Gerade 72, die einen zweiten Nulldurchgang 73 auf der Nullinie 66 aufweist, welcher vom Nulldurchgang 65 der theoretischen Verbindungslinie 64 einen zweiten Abstand 74 aufweist. Zwischen dem Ausgangssignal 52 des iten Sensors 59 und dem Ausgangssignal 53 den i+1ten Sensors 60 liegt eine dritte Gerade 75, die einen dritten Nulldurchgang 76 auf der Nullinie 66 hat, welcher vom Nulldurchgang 65 der theoretischen Verbindungslinie 64 einen dritten Abstand 77 aufweist.

Figur 3 zeigt in Ordinatenrichtung 80 einen Fehler 81 der Positionsbestimmung als Funktion der wahren Position in Meßrichtung 45 zwischen dem i- und i+1ten Sensor 59, 60, der sich als Abweichung der wahren von der als drittem Nulldurchgang 76 errechneten Position ergibt. Der Fehlerverlauf 81 weist ein positives und negatives Maximum 82, 83 sowie einen Nulldurchgang 84 auf.

Die Sensoranordnung 9 arbeitet folgendermaßen:

Die auf dem Substrat 10 angeordneten Sensorreihen 11, 20 sind beispielsweise in Dünnschichttechnik hergestellt. Die Anzahl der Sensoren 13 - 15, 21 - 24 sowie der Abstand zwischen den Sensoren hängen von dem gewünschten Positions- bzw. Längenmeßbereich und der gewünschten Auflösung ab. Es handelt sich beispielsweise um magnetoresistive Elemente, die einen durch das Magnetfeld 46 steuerbaren Widerstand darstellen. Vorteilhaft werden magnetoresistive Elemente mit einer "Barberpole"-Struktur verwendet, die in der Firmenschrift VALVO Technische Information 040323, Seite 3, beschrieben ist. Mit der Barberpole-Struktur wird eine Linearisierung der Sensorkennlinie erreicht, die über einen weiten Bereich ausgedehnt wird, wenn zwei dieser Sensoren gegensinnig geschaltet werden. Der Einfluß des Magnetfelds 46 hat eine gegenläufige Wirkung auf die Widerstände der beiden Teilsensoren. Die Sensoren 12 - 15, 21 - 24 sind somit in diesem Ausführungsbeispiel aus jeweils zwei Teilsensoren zusammengesetzt, deren Ausgangssignale 31 - 38 an Mittelanzapfungen abgenommen werden. Wird über die erste und zweite Stromversorgungsleitung 29, 30 in die Sensoren 12 - 15, 21 - 24 ein (Konstant-)Strom eingeprägt, dann steigt die Spannung am Signalanschluß 31 - 38 eines Sensors 12 - 15, 21 - 24 beim Vorbeibewegen des Magneten 44 zunächst auf einen Extremwert an, fällt dann auf einen entgegengesetzten Extremwert weitgehend linear ab und geht anschließend wieder auf die Ruhespannung zurück, die der Nullinie 66 entspricht.

Mit der Sensoranordnung 9 können sowohl Längen- als auch Winkelmessungen durchgeführt werden.

In der Praxis zeigen die Sensoren 12 - 15, 21 - 24 durch Fertigungstoleranzen einen unterschiedlichen Offset. Ein Offsetabgleich kann beispielsweise durch Zuschalten von Trimm-Widerständen 28, 28' in die Anschlußleitungen 31 - 34, 35 - 38 der Sensoren 12 - 15, 21 - 24 erfolgen. Diese Widerstände sind als magnetfeldunabhängige Serienwiderstände beispielsweise ebenfalls in Dünnschichttechnik auf dem gemeinsamen Substrat 10 mit gleichem Temperaturkoeffizienten wie derjenige der Sensoren 12 - 15, 21 - 24 hergestellt. Es ist jedoch auch möglich, die Offsetwerte in der Anordnung 8 in einem Festwertspeicher zu hinterlegen und eine Offsetkorrektur durch Software durchzuführen. Weiterhin zeigen magnetoresistive Elemente ein nichtlineares Verhalten. Es ist ebenfalls möglich, mit abgespeicherten Korrekturwerten zur Signalentzerrung die theoretische Verbindungslinie 64 zu ermitteln, deren erster und zweiter Extremwert 67, 68 gleich groß sind und deshalb zum Nulldurchgang 65 bezüglich der Nullinie 66 punktsymmetrisch sind.

Die in Figur 2 gezeigte theoretische Verbindungslinie 64 ermöglicht die Positionsbestimmung des Positionsindikators 44 in bezug auf die Sensoranordnung 9 durch Bestimmen der Punkt-Symmetrie-Stelle bzw. des Nulldurchgangs 65 auf der Nullinie 66. Die Nullinie 66 entspricht in der Anordnung 8 beispielsweise einer bestimmten Referenzspannung. Zur Erläuterung der beiden erfindungsgemäßen Verfahren zur Positionsbestimmung wird angenommen, daß sich der Positionsindikator 44 zwischen dem iten und i + 1ten Sensor 59, 60 befindet. Diese Position ist dadurch erkennbar, daß die Ausgangssignale 52, 53 der entsprechenden Sensoren 59, 60 auf unterschiedlichen Seiten bezüglich der Nullinie 66 liegen.

Das erste erfindungsgemäße Verfahren sieht folgende Verfahrensschritte vor:

Die lineare Interpolation zwischen dem Ausgangssignal 51 des i-1ten Sensors 58 und des Ausgangssignals 53 des i + 1ten Sensors 60 ergibt den ersten Nulldurchgang 70 als Schnittpunkt der Gerade 69 mit der Nullinie 66. Die lineare Interpolation zwischen dem Ausgangssignal 52 des iten Sensors 59 und dem Ausgangssignal 54 des i + 2ten Sensors 61 ergibt den zweiten Nulldurchgang 73 als Schnittpunkt der Geraden 72 mit der Nullinie 66. Der Ort des Indikators 44 ist anschließend aus arithmetischen Mittel zwischen dem ersten und zweiten Nulldurchgang 70, 73 ermittelbar.

Eine Positionsbestimmung des Indikators 44 der sich zwischen dem iten und i + 1ten Sensor 59, 60 befindet, ließe sich prinzipiell näherungsweise durch eine lineare Interpolation zwischen dem Ausgangssignal 52 des iten Sensors 59 und dem Ausgangssignal 53 des i + 1ten Sensors 60 als dritter Nulldurchgang 76 der daraus resultierenden Geraden 65 auf der Nullinie 66 bestimmen. Wegen der nichtlinearen Kennlinien der magnetoresistiven Sensoren ist ein solches Verfahren stets mit einem Fehler behaftet, es sei denn, der Indikator 44 steht genau über einem Sensor oder in der Mitte zwischen zwei Sensoren. Zwischen diesen beiden Fällen entsteht ein in Figur 3 gezeigter systematischer Fehlerverlauf 81, der periodisch mit dem Abstand der Sensoren 57 - 63 verläuft. In Ordinatenrichtung 80 ist die Abweichung 77 der als drittem Nulldurchgang 76 errechneten Position von der wahren Position 65 in Meßrichtung 45 angegeben. Der Nulldurchgang 84, der dem Korrekturwert Null entspricht, gibt die Position des Indikators 44 in der Mitte zwischen dem i- und i + 1ten Sensor 59, 60 an. Die beiden Extremwerte 82, 83 hängen von dem gegenseitigen Abstand der Sensoren 57 - 63, von dem Abstand 47 des Indikators 44 von der Sensoranordnung 9 und von der Temperatur ab.

In einem erfindungsgemäßen zweiten Verfahren zur Positionsbestimmung wird von dem beschriebenen einfachen Geraden-Verfahren ausgegangen und der darin enthaltene Fehler 80 nach Figur 3 berücksichtigt. Zunächst wird der Nulldurchgang 76 ermittelt und anschließend ein Korrekturwert addiert. Der Fehlerverlauf 80 läßt sich gut durch ein kubisches Polynom beschreiben. Die Polynomkoeffizienten sind Funktionen des Sensorabstands zwischen den einzelnen Sensoren 57 - 63, des Abstands 47 des Indikators 44 von der Sensoranordnung 9 und der Temperatur. Bei diesen gegebenen Daten wird während des Meßvorgangs der Korrekturwert mit dem kubischen Polynom jedesmal neu berechnet, wobei als Variable des Polynoms der zuvor mit dem einfachen Geraden-Verfahren errechnete Nulldurchgangs-Näherungspositionswert 76 verwendet wird. Vorteilhafter ist es jedoch, den Fehlerverlauf 80 über eine Tabelle zu korrigieren, welche in einem Speicher in der Anordnung 8 hinterlegt ist und während des Meßvorgangs von dort ausgelesen wird. Diese gespeicherten Datensätze werden in Kalibriervorgängen mit unterschiedlichen Abständen des Indikators 44 und unterschiedlichen Temperaturen aufgenommen, berechnet und abgespeichert. Ist der Abstand 47 des Indikators 44 beim Meßvorgang gegeben, so wird unmittelbar auf den gespeicherten Datensatz zurückgegriffen, der für den betreffenden Abstand 47 angelegt ist.

Die beiden erfindungsgemäßen Verfahren zur Positionsbestimmung des Indikators 44 aus den Ausgangssignalen 51 - 54 des i-1ten bis i+1ten Sensors 58 - 61 liefern jedoch ein ungenaues Ergebnis, wenn zusätzlich zu dem Magnetfeld 46 des Indikators 44 ein Stör-Magnetfeld hinzukommt. Ein Stör-Magnetfeld mit einer Magnetfeldkomponente in Meßrichtung 45 führt beispielsweise zu einer Anhebung bzw. Absenkung der gesamten theoretischen Verbindungslinie 64. Der dann ermittelte Nulldurchgang 65 auf der Nullinie 66 ergibt dann nicht mehr die Positionen des Indikators 44 wieder. Eine Kompensation dieses Fehlereinflusses wird durch die Anordnung der zweiten Sensorreihe 20 neben der ersten Sensorreihe 11 erreicht. Die beiden Reihen 11, 20 sind derart verschaltet, daß eine Stör-Magnetfeldkomponente in Meßrichtung 45, beispielsweise in der einen Sensorreihe eine allgemeine Anhebung des Signalpegels, in der anderen Sensorreihe dagegen eine allgemeine Absenkung des Pegels hervorruft oder umgekehrt. Die Feldlinien 46 des quer zur Meßrichtung 45 liegenden Indikators 44 durchsetzen die Sensoren 12 - 15 der ersten Sensorreihe 11 mit einer Magnetfeldkomponente beispielsweise in Meßrichtung 45, während die Sensoren 21 - 24 der zweiten Sensorreihe 20 mit einer Magnetfeldkomponente entgegen der Meßrichtung 45 durchsetzt werden. Der Mittelwert aus der Positionsbestimmung aus den Signalen der ersten Reihe 11 einerseits und den Signalen der zweiten Reihe 20 andererseits ergibt die Position des Indikators 44 unabhängig von einem Stör-Magnetfeld sehr genau.

Solange die Ausgangssingale 50 - 56 auswertbar sind, hängen diese Signale außer vom Abstand 47 des Indikators 44 von der Sensoranordnung 9 auch noch von der Temperatur ab, wenn der Sensorabstand zwischen den Sensoren 12 - 15, 21 - 24 in Meßrichtung 45 als konstant angenommen wird. Eine Temperaturerfassung der Sensoranordnung 9 gestattet deshalb eine Ermittlung des Abstands 47. Dazu ist der Temperatursensor 41 auf dem Substrat 10 vorgesehen. Er ist beispielsweise ebenfalls in Dünnschichttechnik hergestellt. Der enge thermische Kontakt des Temperatursensors 41 mit den beiden Reihen 11, 20 bewirkt, daß an den Anschlußklemmen 42, 43 ein präzises Temperatursignal zur Verfügung steht. Bei langen, in Meßrichtung 45 ausgedehnten Sensorreihen 11, 20 können auch mehrere Temperatursensoren 41 vorgesehen sein. Die Abstandsmessung erweitert die eindimensionale Messung in Meßrichtung 45 zu einer zweidimensionalen Messung, wobei der Abstand 47 des Positionsindikators 44 von der Sensoranordnung 9 variieren kann. Das im folgenden näher erläuterte Auswerteverfahren kann beispielsweise die beiden bereits beschriebenen Verfahren ergänzen.

Zur Abstandsermittlung ist ein Ganzkurven-Auswerteverfahren vorgesehen, bei dem die gesamten Sensorsignale 50 - 56 der Sensoren 57 -63; 12 - 15, 21 - 24 jeweils einer Sensorreihe 11, 20 zur Auswertung herangezogen werden.

Beschreibung der Ausführungsbeispiele zur Abstandsermittlung

In einem Kalibriervorgang, bei dem der Positionsindikator 44 eine vorgegebene Position und einen vorgegebenen Abstand zur Sensoranordnung aufweist, werden die Ausgangssignale 50 - 56 aller Sensoren 57 - 63 erfaßt. Anschließend wird die theoretische Verbindungslinie 64, auf der die Ausgangssignale 50 - 56 liegen, approximiert und Kennwerte, beispielsweise Polynomkoeffizienten, berechnet. Diese Kennwerte werden für jeden relevanten Abstand 47 und festgelegte Temperatur ermittelt und als Datensatz abgespeichert. Bei der Abstandsmessung werden aktuelle Kennwerte aufgenommen und mit den gespeicherten Werten verglichen, wobei die aktuelle Temperatur mitberücksichtigt wird. Bei Übereinstimmung der Kennwerte wird der Abstand 47 ausgegeben. Handelt es sich um eine in Meßrichtung 45 sehr lange ausgedehnte, mit zahlreichen Sensoren bestückte Sensoranordnung 9, dann reicht die Ermittlung von Kennwerten bei der Kalibrierung in einer einzigen vorgegebenen Position des Indikators 44 nicht aus, und es müssen mehrere Kennwertsätze für unterschiedliche Positionen ermittelt und abgespeichert werden.

Mit dem Ganzkurven-Auswerteverfahren ergibt sich weiterhin eine Erhöhung der Betriebssicherheit. Es ist möglich, fehlerhafte Sensoren zu erkennen, da bei vorliegendem Defekt die aktuell ermittelten Kennwerte stark von den gespeicherten Werten abweichen. Die Nummer des defekten Sensors kann angezeigt werden.

Ferner ist es mit dem Ganzkurven-Auswerteverfahren auch möglich, Abweichungen von Sensoren 12 - 15, 21 - 24, die durch Alterungsvorgänge bedingt sind, zu ermitteln und durch einen Korrekturfaktor zu berücksichtigen.

## Ansprüche

1. Verfahren zum Auswerten der von einer Positionsmeßvorrichtung erfaßten Signale mit den Merkmalen:
a) an einem Teil, dessen Position bestimmt werden soll, ist ein Feldlinien aussendendes Element, insbesondere ein Permanentmagnet, als Positionsindikator (44) vorsehbar;
b) dem Positionsindikator (44) ist eine Sensoranordnung (9) zugeordnet, die wenigstens eine in Detektionsrichtung (45) angeordnete Reihe (11, 20) von Sensoren (12 - 15, 21 - 24) enthält;

c) die in definiertem Abstand angeordneten Sensoren (12 - 15, 21 - 24; 57 - 63) geben an eine signalverarbeitende Anordnung (8) Signale ab, die vom Positionsindikator (44) beeinflußbar sind;

d) die von den Sensoren (12 - 15, 21 - 24) abgegebenen, vom Indikator (44) unbeeinflußten Signale der Sensoren (12 - 15, 21 - 24; 57 - 63) liegen auf einer Nullinie (66);

e) die Position des Indikators (44) wird durch Auswerten der von wenigstens einem Teil der Sensoren (12 - 15, 21 - 24; 57 - 63) abgegebenen Signale (50 - 56) ermittelt;

gekennzeichnet durch die Merkmale:

f) Die Ausgangssignale (52, 53) des iten Sensors (59) und des i + 1ten Sensors (60) liegen auf unterschiedlichen Seiten bezüglich der Nullinie (66);

g) die Ausgangssignale (51, 53) des i-1ten und i + 1ten Sensors (58, 60) sowie die Ausgangssignale (52, 54) des iten und i + 2ten Sensors (59, 61) werden jeweils durch lineare Interpolation mit einer Geraden (69, 72) verbunden;

h) aus den Schnittpunkten der Geraden (69, 72) mit der Nullinie (66) werden jeweils Nulldurchgänge (70, 73) ermittelt, die Positionsangaben entsprechen;

i) die Position des Indikators (44) wird durch Mittelwertbildung aus den beiden Nulldurchgängen (70, 73) ermittelt.

2. Verfahren zum Auswerten der von einer Positionsmeßvorrichtung erfaßten Signale mit den Merkmalen:

a) An einem Teil, dessen Position bestimmt werden soll, ist ein Feldlinien aussendendes Element, insbesondere ein Permanentmagnet als Positionsindikator (44) vorsehbar;

b) dem Positionsindikator (44) ist eine Sensoranordnung (9) zugeordnet, die wenigstens eine in Detektionsrichtung (45) angeordnete Reihe (11, 20) von Sensoren (12 - 15, 21 - 24) enthält;

c) die in definiertem Abstand angeordneten Sensoren (12 - 15, 21 - 24; 57 - 63) geben an eine signalverarbeitende Anordnung (8) Signale ab, die vom Positionsindikator (44) beeinflußbar sind;

d) die von den Sensoren (12 - 15, 21 - 24) abgegebenen, vom Indikator (44) unbeeinflußten Signale der Sensoren (12 - 15, 21 - 24; 57 - 63) liegen auf einer Nullinie (66);

e) die Position des Indikators (44) wird durch Auswerten der von wenigstens einem Teil der Sensoren (12 - 15, 21 - 24; 57 - 63) abgegebenen Signale (50 - 56) ermittelt;

gekennzeichnet durch die Merkmale:

f) Die Ausgangssignale (52, 53) des iten Sensors (59) und des i + 1ten Sensors (60) liegen auf unterschiedlichen Seiten bezüglich der Nullinie (66);

g) die Ausgangssignale (52, 53) des iten und i + 1ten Sensors (59, 60) werden durch lineare Interpolation mit einer Geraden (75) verbunden;

h) aus dem Schnittpunkt der Geraden (75) mit der Nullinie (66) wird ein Nulldurchgang (76) ermittelt, dem eine Positionsangabe entspricht;

i) zur ermittelten Position wird ein Korrekturwert addiert, der aus dem Positionswert selbst ermittelt wird, der als unabhängige Variable einer Funktion eingesetzt wird, in welcher die aktuelle Temperatur und der bekannte Abstand des Positionsindikators (44) von der Sensoranordnung (9) berücksichtigt sind;

j) der Einfluß von Temperatur und Abstand (47) auf die Ausgangssignale (50 - 56) wird in einem Kalibriervorgang ermittelt und abgespeichert.

3. Verfahren nach Anspruch 2, dadurch gekennzeichnet, daß die Funktion zur Ermittlung des Korrekturwerts ein Polynom dritten Grades ist, dessen Koeffizienten von Temperatur und Abstand (47) abhängige, experimentell ermittelte Werte sind.

4. Verfahren zum Auswerten der von einer Positionsmeßvorrichtung erfaßten Signale mit den Merkmalen:

a) An einem Teil, dessen Position bestimmt werden soll, ist ein Feldlinien aussendendes Element, insbesondere ein Permanentmagnet als Positionsindikator (44) vorsehbar;

b) dem Positionsindikator (44) ist eine Sensoranordnung (9) zugeordnet, die wenigstens eine in Detektionsrichtung (45) angeordnete Reihe (11, 20) von Sensoren (12 - 15, 21 - 24) enthält;

c) die in definiertem Abstand angeordneten Sensoren (12 - 15, 21 - 24; 57 - 63) geben an eine signalverarbeitende Anordnung (8) Signale ab, die vom Positionsindikator (44) beeinflußbar sind;

d) die von den Sensoren (12 - 15, 21 - 24; 57 - 63) abgegebenen, vom Indikator (44) unbeeinflußten Signale der Sensoren (12 - 15, 21 - 24) liegen auf einer Nullinie (66);

e) die Position des Indikators (44) wird durch Auswerten der von wenigstens einem Teil der Sensoren (12 - 15, 21 - 24; 57 - 63) abgegebenen Signale (50 - 56) ermittelt;

gekennzeichnet durch die Merkmale:

f) In einem Kalibriervorgang, bei dem der Positionsindikator (44) eine vorgebbare Position und einen vorgebbaren Abstand (47) zur Sensoranordnung (9) aufweist, werden die Ausgangssignale (50 - 56) der Sensoren (57 - 63) erfaßt;

g) eine theoretische Verbindungslinie (64), auf der die Ausgangssignale (50 - 53) der Sensoren (57 - 63) liegen, wird approximiert und Kennwerte, beispielsweise Polynomkoeffizienten, werden abgespeichert;

h) der Kalibriervorgang und die Kennwertspeicherung werden bei unterschiedlichen Abständen (47) und bei unterschiedlichen Temperaturen, die von wenigstens einem der Sensoranordnung (9) zugeordneten Temperatursensor (41) erfaßt werden, wiederholt;

i) bei einem Meßvorgang wird der Abstand (47) des Indikators (44) von der Sensoranordnung (9) durch Vergleich der aktuell ermittelten und gespeicherten Kennwerte berechnet.

5. Verfahren nach Anspruch 4, dadurch gekennzeichnet, daß durch Vergleich der abgespeicherten Kennwerte zur Approximation der theoretischen Verbindungslinie (64) mit den in der Anordnung (8) nach einem Kalibriervorgang gespeicherten Kennwerte defekte Sensoren (12 - 15, 21 - 24; 57 - 63) erkannt werden.

6. Verfahren nach Anspruch 4, dadurch gekennzeichnet, daß durch Vergleich der ermittelten Kennwerte zur Approximation der theoretischen Verbindungslinie (64) mit denen in der Anordnung (8) nach einem Kalibriervorgang gespeicherten Kennwerten Alterungs- bzw. Driftvorgänge der einzelnen Sensoren (12 - 15, 21 - 24; 57 - 63) erkannt werden.

FIG.1

EP 0 369 493 A2

# FIG. 2

# FIG. 3